# EUROPEAN PATENT SPECIFICATION

(11) **EP 1 851 091 B1**
(45) Date of publication and mention of the grant of the patent: **07.04.2010**
(21) Application number: 06716019.2
(22) Date of filing: 20.02.2006
(51) Int. Cl.: B60R 13/08

(54) **THE MEMBER FOR INTERIOR PRODUCTS OF MOTOR VEHICLES WITH MULTILAYER STRUCTURE**
ELEMENT FÜR INNENPRODUKTE VON KRAFTFAHRZEUGEN MIT MEHRSCHICHTIGER STRUKTUR
ELEMENT POUR PRODUITS INTERIEURS DE VEHICULES A MOTEUR PRESENTANT UNE STRUCTURE MULTICOUCHE

(30) Priority: 21.02.2005 KR 20050014176
(43) Date of publication of application: 07.11.2007
(73) Proprietor: Li & S CO., LTD ., Jiksan-myeon Cheonan Ch'ungch'ong namdo 330-815 (KR)
(72) Inventor: SEO, Duck-Hyun, Paldal-gu, Suwon, Gyungi-do 442-835 (KR)
(74) Representative: LOUIS, PÖHLAU, LOHRENTZ
(86) International application number: PCT/KR2006/000569
(87) International publication number: WO 2006/112599

(56) References cited:
- WO-A-2004/037535
- CA-C- 2 179 820
- DE-A1- 19 859 924
- JP-A- 2003 306 068
- KR-A- 19980 025 349
- KR-A- 20020 042 081
- KR-A- 20030 045 982
- US-A- 5 709 925

## Description

### Technical Field

The present invention relates to a lightweight composite board for automotive interior parts, and more particularly to a natural fiber-containing lightweight composite board for automotive interior parts, such as package trays, door trim, headliners and seat back panels, which is produced by blending thermoplastic fiber as a base material with thermoplastic organic fiber and natural fiber as reinforcing fibers at various blending ratios, forming a multilayer structure from the fiber blends, and compressing and expanding the multilayer structure in a continuous composite board manufacturing apparatus.

### Background Art

Recently, due to anxiety over the exhaustion of crude oil resources, the development of alternative energy and the prevention of environmental pollution have been considered to determine the future of nations. As the trend toward light weight has accordingly been driven in the automobile industry for the purpose of improving automotive fuel efficiency and reducing exhaust gas, which is the main cause of environmental pollution, the use of polymer composite material as a material substituting for metal has rapidly increased. As composite materials for automotive interior parts, highly thermal resistant/highly rigid composite materials, consisting of a polymer material, such as polypropylene or thermoplastic olefin (TPO), reinforced with reinforcing materials, such as glass fiber and carbon fiber, or thermosetting composite materials obtained by reinforcing unsaturated polyester (PET) resin and thermoplastic polymer with rubber, have been used in various applications, because they have performance superior to metal.

However, these FRPs (fiber reinforced plastics) are not satisfactory with respect to impact resistance and fracture toughness, exceed a limited degree of deformation and, at the same time, are not recyclable, entailing a critical problem of environmental pollution. For this reason, materials substituting for FRPs have recently been used, and examples thereof include injection-molded articles consisting of thermoplastic polymer resin reinforced with a reinforcing material, such as talc, wood flour, natural fiber or glass fiber, and molded articles obtained by mixing thermoplastic fiber with natural fiber, making the mixed fiber in the form of nonwoven fabrics, and molding the nonwoven fabrics by hot pressing. Particularly, the latter articles are receiving attention due to their biodegradability and light weight, and realize high productivity because a stamp molding process can be applied, as in the molding of metal, unlike the existing FRPs. In addition, these articles maintain high design freedom compared to metal. Therefore, these articles are being increasingly used in various industrial fields.

However, in the case of the nonwoven fabric for automotive interior parts, produced by mixing thermoplastic fiber with natural fiber, it is difficult to uniformly disperse powder, such as reinforcing fiber or wood flour, in thermoplastic polymer resin, making it difficult to expect high-quality products having a constant quality. Also, because the nonwoven fabric is produced and distributed in the form of thermoplastic nonwoven fabric, the subsequent in-situ molding of the nonwoven fabric using a hot press at high temperature can induce non-uniform bonding between an outer layer and an inner layer, and also imposes a limitation on improvement of strength.

US 5,709,925 describes a form-stable structural panel including a laminated composite substrate comprising: A first cover layer comprising first synthetic fibers and a first fibrous thermoplastic matrix material that has a melting temperature lower than said first synthetic fibers, and including essentially no natural fibers; a core layer comprising natural fibers and fibrous thermoplastic core matrix material; and
a second cover layer comprising second synthetic fibers and a second fibrous thermoplastic matrix material that has a melting temperature lower than said second synthetic fibres, and including essentially no natural fibers;
wherein said first cover layer, said core layer and said second cover layer are laminated together with said core layer between said first and second cover layers.

### Disclosure of Invention

### Technical Problem

The present invention has been made to solve the above-described problems occurring in the prior art, and it is an object of the present invention to provide a natural fiber-containing lightweight composite board for automotive interior parts, which shows excellent moldability, thermal insulation, sound absorption and impact absorption properties, has a multilayer structure designed by blending thermoplastic fiber as a base material fiber with natural fibers as a reinforcing fiber at a suitable ratio, is lightweight as a result of compressing and expanding a nonwoven fabric in a continuous composite board manufacturing apparatus while controlling the dispersion of heat in thermal bonding, overcomes the limitation of thermoplastic organic fibers when used for automotive interior parts related to their low thermal resistance, through the use of a bulky multilayer structure containing natural fiber, has the effects of lightweight, durable and recyclable properties due to the use of a combination of thermoplastic organic fiber and natural fiber, can be manufactured to have various water absorption rates and strengths at the same weight and thickness by designing it to have a multilayer structure and controlling the dispersion of heat in thermal bonding, and is manufactured as a high-performance composite board having a fine porous layer from a nonwoven fabric designed to have a multilayer structure, through the use of the continuous composite board manufacturing apparatus designed by the applicant.

### Technical Solution

To achieve the above object, according to one aspect of the present invention, there is provided a high-performance lightweight composite board for automotive interior parts, comprising: an inner layer 2 integrally made of a blend of 40-90 wt% base material with 10-60 wt% natural fiber; and an outer layer 1 or 3 adhered to at least one surface of the inner layer 2 and integrally made of a blend of 60-90 wt% base material with 10-40 wt% polyester or a blend of 60-80 wt% base material, 15-25 wt% polyester and 5-15 wt% natural fiber.

According to another aspect of the present invention, there is a method for manufacturing a high-performance lightweight composite board for automotive interior parts, the method comprising: a fiber opening and blending step of opening and uniformly blending 40-90 wt% base material and 10-60 wt% natural fiber to form a first fiber blend, and opening and uniformly blending 60-90 wt% base material and 10-40 wt% natural fiber, or 60-80 wt% base material, 15-25 wt% polyester and 5-15 wt% natural fiber; a carding step of passing each of the first fiber blend and the second fiber blend through a cylindrical carding machine to form thin fibrous webs; a doubling step of stacking the thin fibrous webs on each other to form a multilayer web structure; a step of bonding the layers of the multilayer web structure to each other by needle punching to make a nonwoven fabric; and feeding the nonwoven fabric into a continuous composite board manufacturing apparatus, in which the nonwoven fabric is subjected to continuous processes of preheating, thermal bonding, pressing, cooling, expanding, and cutting, thus manufacturing the lightweight composite board.

Preferably, the doubling step is performed by stacking the web formed from the first fiber blend as an inner layer 2 and the web formed from the second fiber blend as an outer layer 1 or 3 on each other so as to place the outer layer 1 or 3 on at least one surface of the inner layer 2.

Still another object of the present invention is to provide a natural fiber-containing lightweight composite board for automotive interior parts, which is manufactured according to said method.

Preferably, the base material is a polypropylene or a sheath/core bicomponent fiber composed of a high-melting-point core component and a low-melting-point sheath component.

Preferably, the natural fiber is any one selected from among hemp, jute, flax, kenaf, abaca and banana fibers.

Still preferably, the sheath/core bicomponent fiber is a blend of 50-70 wt% of a core component having a melting point of 240-270 °Cand 30-50 wt% of a sheath component having a melting point of 110-180 °C, and is any one selected from among a bicomponent fiber composed of polyester copolymer as the sheath component and polyester as the core component, a bicomponent fiber composed of polyester glycol as the sheath component and polyester as the core component, a bicomponent fiber composed of high-density polyethylene as the sheath component and polyester as the core component, a bicomponent fiber composed of high-density polyethylene as the sheath component and polypropylene as the core component, and a bicomponent fiber composed of polypropylene as the sheath component and polyester as the core component.

Yet still another object of the present invention is to provide an automotive interior part comprising said lightweight composite board.

Hereinafter, the present invention will be described in detail.

The present invention relates to a lightweight composite board for automotive interior parts, which is manufactured by blending a base material, consisting of polypropylene or a sheath-core bicomponent fiber composed of a high-melting-point core component and a low-melting-point sheath component, with a reinforcing material, consisting of polyester or natural fiber, at various blending ratios, forming a multilayer structure from the fiber blends, and compressing the multilayer structure in a continuous composite board manufacturing apparatus, thus obtaining the lightweight composite board.

The present invention is characterized in the following respects. First, the present invention provides an eco-friendly material for automobiles, which overcomes the limitation of thermoplastic organic materials in use for automotive interior parts, caused by their low thermal resistance, through the design of a bulky multilayer structure comprising natural fiber, and has lightweight, durable and recyclable properties through the use of a combination of polypropylene, polyester fiber and natural fiber. Second, the present invention provides a lightweight, easy-to-mold, and high-performance composite board having a fine porous layer from a nonwoven fabric designed to have a multilayer structure, through the use of the continuous composite board manufacturing apparatus designed by the applicant. Third, according to the present invention, various kinds of composite board having various water absorption rates ranging from 1% to 30% at the same weight can be obtained through designing a suitable multilayer structure and controlling the dispersion of heat in thermal bonding. Fourth, according to the present invention, composite boards having a low strength of less than 25 MPa, a medium strength of 25-50 MPa and a high strength of more than 50 MPa at the same weight can be obtained through designing the multilayer structure and controlling the dispersion of heat in thermal bonding. Fifth, the composite board manufactured according to the present invention has excellent moldability, thermal insulation, sound absorption and impact absorption properties due to its multilayer composite structure and high porosity, and thus can be used in various applications, such as automotive interior parts and industrial materials. Finally, the composite board according to the present invention has an economic value of cost reduction, because it comprises 10-50 wt% natural fiber.

According to the present invention, having the characteristics described above, the outer layer and the inner layer can be designed to have various composition ratios between the base material fibers and the reinforcing fibers, the physical properties and characteristics of the composite board varying depending on the composition ratio. In the present invention, a base material (preferably, polypropylene (PP) or sheath-core bicomponent fiber) and polyester, or said base material, polyester and natural fiber (preferably, hemp, jute, flax, kenaf or banana fiber), are opened and blended with each other to form a thin web layer to be used as the outer layer 1 or 3. Meanwhile, polypropylene (PP) and natural fiber (preferably, hemp, jute, flax, kenaf or banana fiber) are opened and blended with each other to form a thin web layer to be used as the inner layer (core layer) 2. The formed webs are subjected to a doubling process of stacking them on each other to form a multilayer structure. The layers of the multilayer structure are bonded to each other by needle punching to make a nonwoven fabric which is then fed into a continuous composite board manufacturing apparatus, in which the nonwoven fabric is subjected to a series of processes, including preheating, thermal bonding, pressing, cooling, expanding and cutting processes, thus m anufacturing a high-performance composite board.

According to the present invention, the outer layer 1 or 3 contains a higher ratio of the base material than the reinforcing fiber. Specifically, the outer layer is made of a blend of 60-90 wt% base material and 10-40 wt% polyester, or a blend of 60-80 wt% base material, 15-25 wt% polyester and 5-15 wt% natural fiber, so as to make the surface of the outer layer 1 or 3 smooth, uniform and fine. This provides water absorption resistance, thermal insulation and sound insulation effects and, at the same time, increases adhesion to a finishing nonwoven fabric.

According to the present invention, the inner layer 2 has an increased content of the reinforcing fiber compared to that of the outer layer. Specifically, the inner layer is made of a mixture of 40-90 wt% base material and 10-60 wt% natural fiber. This aims to maintain strength and form bulky or numerous micropores so as to provide thermal insulation, thermal stability and sound absorption properties while maintaining excellent impact stability. Also, thanks to the high water content and hygroscopic properties of the natural fiber, it can solve problems, such as odor, mold production and brittleness, and induce uniform thermal bonding between the base material and the natural fiber as the reinforcing material.

Meanwhile, if the natural fiber content of the inner layer 2 is less than 10 wt%, the area of a porous layer will be reduced, leading to deterioration in the sound absorption and impact absorption properties of the resulting composite board. In addition, it will lose the intrinsic characteristics of the thermoplastic composite board and increase economic cost.

On the other hand, if the natural fiber content of the inner layer 2 is more than 60 wt%, the content of the base material, functioning as a binder, will be relatively decreased, so that the binding force between the base material and the natural fiber will weaken, causing problems in impregnation and binding to the base material by bonding, such as high moisture content, strength reduction, and interlayer delamination.

For this reason, in order to maintain sound absorption, thermal insulation and impact absorption properties due to the highly porous layer, the inner layer 2 preferably contains 10-60 wt% of natural fiber.

In another embodiment, the present invention provides a lightweight composite board for automotive interior parts, in which the inner layer 2 consists of an intermediate inner layer 2-2 made of 50-60 wt% base material and 40-50 wt% natural fiber, and an upper inner layer 2-1 and lower inner layer 2-3 each made of 60-70 wt% base material and 20-30 wt% natural fiber. The upper inner layer and the lower inner layer are the same with respect to the contents of the base material and the natural fiber within a ratio range of 40-90 wt% of the base material to 10-60 wt% of the natural fiber, and the intermediate inner layer has a base material content and natural fiber content different from those of the upper inner and lower inner layers.

According to the present invention, the sheath-core bicomponent fiber, used as one of the base materials, is composed of about 30-50 wt% of a sheath component having a melting point of 110-180 °C and about 50-70 wt% of a core material having a melting point of 230-270 °C, and thus serves as both a binder and a reinforcing fiber. Accordingly, due to the application of a temperature of 180-220 °C upon the manufacture of the composite board, only the sheath component is slowly melted and bonded to the reinforcing fiber to form a three-dimensional network structure, and the core component has a characteristic of being capable of preventing rapid degradation in physical properties, due to the partial heat shielding effect of the sheath component, so that it can serve as a reinforcing fiber. This sheath-core bicomponent fiber may be any one selected from among a bicomponent fiber composed of polyester copolymer as the sheath component and polyester as the core component, a bicomponent fiber composed of polyester glycol as the sheath component and polyester as the core component, a bicomponent fiber composed of high-density polyethylene as the sheath component and polyester as the core component; a bicomponent fiber composed of high-density polyethylene as the sheath component and polypropylene as the core component, and a bicomponent fiber composed of polypropylene as the sheath component and polyester as the core component.

Also, as the reinforcing fiber, natural fiber is used. Considering the thermal stability, dimensional stability, impact resistance, strength, and lightweight properties of the composite board, the natural fiber which is used in the present invention is any one selected from among hemp, jute, flax, kenaf, abaca and banana fibers.

The inventive method for manufacturing the lightweight composite board according to the present invention comprises: a fiber opening and blending step of opening and uniformly blending base fiber and reinforcing fiber according to the desired characteristics of layers; a carding step of passing the opened and blended fibers through a cylindrical carding machine to form thin fibrous webs; a doubling step of stacking the thin fibrous webs on each other according to the desired weight of a product so as to form a multilayer structure; a step of bonding the layers of the multilayer structure to each other by needle punching to make nonwoven fabrics having various compositions and weights according to the intended use thereof; and feeding the nonwoven fabric into a continuous composite board manufacturing apparatus, in which the nonwoven fabric is subjected to continuous processes of preheating, thermal bonding, pressing, cooling, expanding and cutting, thus manufacturing the lightweight composite board.

According to the present invention, in the fiber opening and blending step, 40-90 wt% base material (preferably polypropylene) and 10-60 wt% natural fiber are opened and uniformly blended with each other to form a first fiber mixture, and also 60-90 wt% base material (preferably polypropylene) or sheath-core composite fiber and 10-40 wt% polyester, or 60-80 wt% base material, 15-25 wt% polyester and 5-15 wt% natural fiber, are opened and uniformly blended to form a second fiber mixture. A web formed from the first fiber mixture is used for the inner layer 2, and a web formed from the second fiber mixture is used for the outer layers 1 and 3. In the doubling step, these thin fibrous webs are stacked on each other to form a multilayer structure in a way such that the outer layer 1 or 3 is placed on at least one surface of the inner layer 2.

According to the present invention, the multilayer composite nonwoven fabric produced in the nonwoven fabric-producing making step is fed into the continuous composite board manufacturing apparatus. This apparatus is disclosed in International Patent Application No. PCT/KR02/00658, entitled "Method and apparatus for manufacturing a composite material having improved performance", and characterized in that the density, strength and thickness of the composite material can be freely controlled according to the intended use thereof, through continuous process units consisting of a preheating unit, a thermal bonding unit, a pressing unit, an expanding unit, a cooling unit and a cutting unit.

According to the present invention, to manufacture a lightweight composite board using the continuous composite board apparatus, staple fibers (base material fiber and reinforcing fiber; 50-80 mm) having 8-12 crimps/inch are subjected to a fiber opening and blending step, in which these fibers are split by the fiber splitting cylinder of a fiber splitting machine, and the split fibers are uniformly dispersed and mixed in a dispersing machine. The opened and blended fibers are passed through a cleaning machine for improving physical properties thereof (i.e., tensile strength or impact strength) in order to manufacture a random uniaxial composite fiber board. The opened and blended fibers are passed through a cylindrical carding machine to form thin fibrous webs which are then subjected to a doubling step of stacking the webs on each other to form a multilayer web structure. The multilayer web is transported by a conveyor belt through pressing rollers to a needle punching machine, in which it is manufactured into a nonwoven fabric by needle punching. The needle-punching machine plays an important role in controlling the thickness and density of the fed web, and if the web is not passed through the needle-punching machine, it is highly likely to damage a heater or catch fire by coming into contact with the heater, when it passes through a heating plate in a fluffy state, like cotton. By needle punching, the intrinsic shrinkage of the fibers, which occurred upon passage through the preheating zone and the heating plate, can be greatly reduced to improve the uniformity of the composite board, and as a result of the reduction in the volume of the fibers, damage to the heater by the composite board or the risk of fire by contact with the heater can be minimized.

The composite nonwoven fabric manufactured by the needle punching is transported into a continuous composite board manufacturing apparatus. The continuous composite board manufacturing apparatus comprises first and second preheating zones, first, second and third melt pressing/expanding zones, a cooling zone, and a cutting unit. First, the composite nonwoven fabric is passed through the first and second preheating zones to transfer heat into the nonwoven fabric, such that the thermoplastic organic fiber, i.e., polypropylene or sheath-core bicomponent fiber, can easily penetrate between the reinforcing fibers in the melt pressing/expanding zones. By subjecting the nonwoven fabric to this preheating step, the wettability of resin onto the reinforcing fiber is increased and the resin is impregnated into the composite board, and thus a high-strength composite board can be manufactured. The preheated composite nonwoven fabric is passed through pressing rollers in the heating/ pressing zone to manufacture a composite board having a constant thickness. Specifically, the composite nonwoven fabric passing through the first melt pressing/ expanding zone is melted and pressed by conducting the heat of the belt conveyor to the composite nonwoven fabric while maintaining a constant thickness using the pressing rollers. In the second melt pressing/expanding zone, the thermoplastic organic fiber as the base material is melted and impregnated into the reinforcing fiber. In the third melt pressing/expanding zone, the temperature of the nonwoven fabric is maintained as it is, and the impregnation and wettability of the thermoplastic resin are sufficiently aged such that the porosity of the fabric is minimized only by the application of pressure. Also, if the nonwoven fabric is cooled after the heating/pressing step, a composite board maintaining high performance can be manufactured. Also, if the nonwoven fabric is reheated and the interval between the upper and lower rollers in the cooling zone widens, a pseudo-expansion-type high-performance lightweight board can be manufactured using the modulus of the reinforcing fiber itself.

### Advantageous Effects

As described above, the present invention provides a high-performance lightweight composite board for automotive interior parts, which overcomes the limitation of thermoplastic organic fibers in use for automotive interior parts, caused by their low thermal resistance, through the design of the bulky multilayer structure comprising natural fiber, has lightweight, durable and recyclable properties through the use of a combination of thermoplastic organic fiber and natural fiber, and is manufactured to have a fine porous layer from the nonwoven fabric designed with the bulky multilayer structure, using the continuous composite board manufacturing apparatus designed by the applicant.

Also, by designing the multilayer structure and controlling the dispersion of heat in thermal bonding, it is possible to manufacture composite boards having various water absorption rates and strengths at the same weight and thickness. Thus, these composite boards can be used for various automotive interior parts, as well as building and industrial materials, such as partitions, furniture and plywood, and have excellent moldability, thermal insulation, sound absorption and impact absorption properties due to a multilayer composite structure and high porosity. In addition, the use of natural fiber in the present invention provides an eco-friendly composite board and has the effect of reducing the cost of the board.

### Brief Description of the Drawings

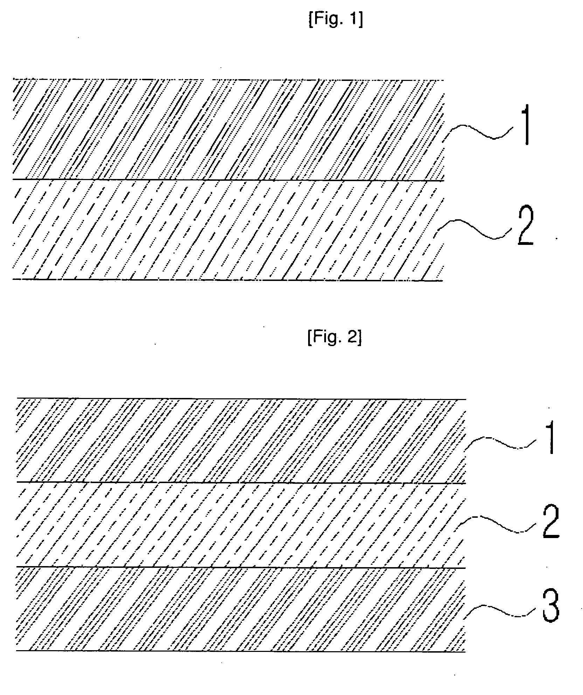

FIG. 1 is a cross-sectional view showing a two-layer composite board for automotive interior parts according to the present invention.

FIG. 2 is a cross-sectional view showing a three-layer composite board for automotive interior parts according to the present invention.

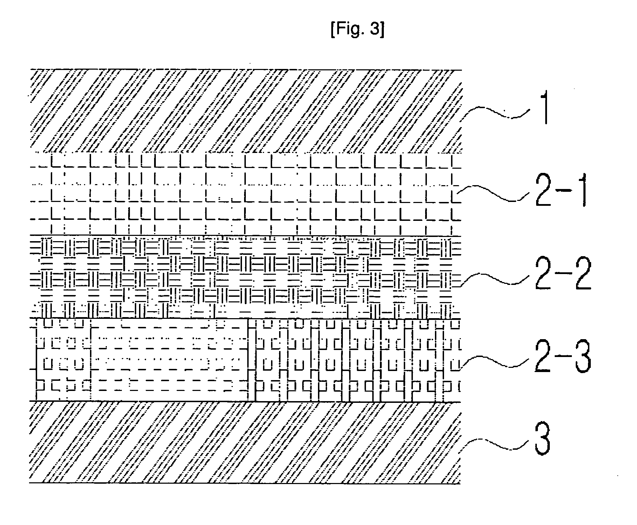

FIG. 3 is a cross-sectional view showing a five-layer composite board for automotive interior parts according to the present invention.

<Description of reference numerals on drawings>

1 and 3: outer layers; 2-1: upper inner layer

2: inner layer; 2-2: intermediate inner layer

2-3: lower inner layer

### Best Mode for Carrying Out the Invention

Hereinafter, the present invention will be described with reference to examples.

Example 1

80 wt% polypropylene (PP) and 20 wt% jute, 70 wt% polypropylene (PP) and 30 wt% jute, 60 wt% polypropylene (PP) and 40 wt% jute, 50 wt% polypropylene (PP) and 50 wt% jute, or 40 wt% polypropylene (PP) and 60 wt% jute were opened and blended with each other, and each of the fiber blends was passed through a cylindrical carding machine to form a thin fibrous web to be used as the inner layer (core layer) 2. Meanwhile, 70 wt% polypropylene (PP), 22 wt% polyester (PET) and 8 wt% jute were opened and uniformly blended with each other, and the blend was passed through the carding machine to form a thin fibrous web to be used as the outer layer 1 or 3. A doubling step was performed so as to place the outer layers 1 and 3 on both surfaces of the inner layer 2, and the layers were bonded to each other by needle punching. The composite nonwoven fabric formed by the needle punching had a weight of 2100 g/m², and was passed through a continuous composite board manufacturing apparatus at a speed of 6 m/min to manufacture composite boards having a thickness of 2.5 ± 0.1 mm. The internal structure of the continuous composite board manufacturing apparatus consisted of a preheating unit, a melt pressing/expanding unit, a cooling unit and a cutting unit. The preheating unit was maintained at a temperature of 180 °C, and the melt pressing/expanding unit consisted of four zones which were maintained at a temperature of 210-250 °C, and the cooling unit consisted of two zones which were automatically maintained at temperatures of 60 °C and 30 °C, respectively. Changes in physical properties according to the content of natural fiber (jute) in the inner layer 2 of the composite board are shown in Table 1 below.

In Table 1, MD represents machine direction, and AMD represents across-machine direction, perpendicular to the machine direction.

**Table 1**

| Sample | | | KRP-1 | KRP-2 | KRP-3 | KRP-4 | KRP-5 |
|---|---|---|---|---|---|---|---|
| Jute Content in Core Layer (wt%) | | | 20 | 30 | 40 | 50 | 60 |
| Specific Gravity (g/cm³) | | | 0.84 | 0.84 | 0.84 | 0.84 | 0.84 |
| Tensile | Strength (MPa) | MD | 44.5 | 57.3 | 51.5 | 48.4 | 35.8 |
| | | AMD | 37.3 | 46.5 | 43.4 | 40.2 | 29.5 |
| | Modulus (GPa) | MD | 3.3 | 4.2 | 4.1 | 3.9 | 3.7 |
| | | AMD | 2.6 | 3.6 | 3.7 | 3.5 | 3.2 |
| | Elongation (%) | MD | 6.8 | 5.2 | 4.9 | 3.7 | 6.5 |
| | | AMD | 7.5 | 5.6 | 5.4 | 5.1 | 8.1 |
| Flexural | Strength (MPa) | MD | 47.4 | 58.3 | 57.1 | 56.3 | 39.5 |
| | | AMD | 41.5 | 47.4 | 48.6 | 47.3 | 26.8 |
| | Modulus (GPa) | MD | 3.7 | 4.4 | 4.3 | 3.9 | 2.9 |
| | | AMD | 3.3 | 3.6 | 3.5 | 3.3 | 2.2 |
| Moisture absorption, after 2.5h (%) | | | 1.2 | 1.7 | 1.9 | 4.5 | 10.2 |

Example 2

60 wt% polypropylene (PP) and 40 wt% jute were opened and blended, and the fiber blend was passed through a cylindrical carding machine to form a thin fibrous web to be used as the inner layer 2. Meanwhile, 70 wt% polypropylene(PP), 22 wt% polyester(PET) and 8 wt% jute were opened and uniformly blended, and the fiber blend was passed through the carding machine to form a thin fibrous web to be used as the outer layer 1 or 3. A doubling step was performed so as to place the outer layers 1 and 3 on both surfaces of the inner layer 2, and the layers were bonded to each other by needle punching. The composite nonwoven fabrics formed by the needle punching had weights of 1600, 1800, 2500 and 3200 g/m², and were passed through a continuous composite board manufacturing apparatus at a speed of 6 m/min to manufacture composite boards having a thickness of 3.0 ± 0.1 mm. The internal structure of the continuous composite board manufacturing apparatus consisted of a preheating unit, a melt pressing/expanding unit, a cooling unit and a cutting unit. The preheating unit was maintained at a temperature of 180 °C, and the melt pressing/expanding unit consisted of four zones which were maintained at a temperature of 200-240 °C, and the cooling unit consisted of two zones which were maintained at temperatures automatically controlled to 60 °C and 30 °C, respectively. Physical properties according to the weight of the composite board are shown in Table 2 below.

**Table 2**

| Sample | | | KRP-6 | KRP-7 | KRP-8 | KRP-9 | KRP-10 |
|---|---|---|---|---|---|---|---|
| Weight (g/m²) | | | 1,600 | 1,800 | 2,100 | 2,600 | 3,200 |
| Specific Gravity (g/cm³) | | | 0.53 | 0.60 | 0.70 | 0.87 | 1.06 |
| Tensile | Strength (MPa) | MD | 25.8 | 43.5 | 57.3 | 60.3 | 66.4 |
| | | AMD | 21.5 | 34.6 | 46.5 | 50.5 | 59.8 |
| | Modulus (GPa) | MD | 2.6 | 3.1 | 4.3 | 4.7 | 5.3 |
| | | AMD | 2.1 | 2.6 | 3.8 | 4.2 | 4.7 |
| | Elongation (%) | MD | 5.8 | 5.7 | 5.4 | 5.1 | 4.7 |
| | | AMD | 6.5 | 6.3 | 5.9 | 5.6 | 5.3 |
| Flexural | Strength (MPa) | MD | 39.6 | 47.5 | 59.1 | 65.5 | 67.5 |
| | | AMD | 28.5 | 36.6 | 52.6 | 54.3 | 58.4 |
| | Modulus (GPa) | MD | 2.6 | 3.2 | 4.5 | 4.9 | 5.7 |
| | | AMD | 2.1 | 2.8 | 3.8 | 4.1 | 4.7 |
| Moisture absorption, after 2.5h (%) | | | 3.1 | 2.5 | 2.2 | 1.6 | 1.3 |

Example 3

60 wt% polypropylene (PP) and 40 wt% jute were opened and blended, and the fiber blend was passed through a cylindrical carding machine to form a thin fibrous web to be used as the inner layer 2. Meanwhile, 70 wt% polypropylene (PP), 22 wt% polyester (PET) and 8 wt% jute were opened and uniformly blended, and the fiber blend was passed through the carding machine to form a thin fibrous web to be used as the outer layer 1 or 3. A doubling step was performed so as to place the outer layers 1 and 3 on both surfaces of the inner layer 2, and the layers were bonded to each other by needle punching. The composite nonwoven fabric formed by the needle punching had a weight of 1800 g/m², and was passed through a continuous composite board manufacturing apparatus at a speed of 6 m/min to manufacture composite boards. The internal structure of the continuous composite board manufacturing apparatus consisted of a preheating unit, a melt pressing/expanding unit, a cooling unit, and a cutting unit. The preheating unit was maintained at a temperature of 180°C, and the melt pressing/expanding unit consisted of four zones which were maintained at a temperature of 200-240 °C, and the cooling unit consisted of two zones which were maintained at temperatures automatically controlled to 60 °C and 30 °C, respectively. Also, the thickness and density of the composite boards were controlled by controlling the gap between upper and lower rollers and belts located in the melt pressing/ expanding unit and the cooling unit. The results are shown in Table 3 below.

**Table 3**

| Sample | | | KRP-11 | KRP-12 | KRP-13 | KRP-14 | KRP-15 |
|---|---|---|---|---|---|---|---|
| Thickness (mm) | | | 2.0 | 2.5 | 3.0 | 3.6 | 4.3 |
| Specific Gravity (g/cm³) | | | 0.90 | 0.72 | 0.60 | 0.51 | 0.42 |
| Tensile | Strength (MPa) | MD | 34.2 | 37.7 | 43.5 | 42.7 | 38.5 |
| | | AMD | 27.5 | 30.5 | 34.6 | 34.1 | 31.5 |
| | Modulus (GPa) | MD | 2.5 | 3.2 | 3.4 | 3.3 | 2.8 |
| | | AMD | 2.1 | 2.5 | 2.7 | 2.6 | 2.0 |
| | Elongation (%) | MD | 5.9 | 5.5 | 5.1 | 4.8 | 4.5 |
| | | AMD | 6.3 | 6.1 | 5.7 | 5.5 | 5.2 |
| Flexural | Strength (MPa) | MD | 32.1 | 42.5 | 47.5 | 50.4 | 57.4 |
| | | AMD | 26.3 | 34.3 | 36.6 | 39.1 | 43.2 |
| | Modulus (GPa) | MD | 2.9 | 3.2 | 3.5 | 3.9 | 4.5 |
| | | AMD | 2.3 | 2.7 | 2.8 | 3.3 | 4.0 |
| Moisture absorption, after 2.5h(%) | | | 1.2 | 1.7 | 2.1 | 4.5 | 8.5 |

Example 4

50 wt% low-melting-point sheath-core polyester fiber (LM, commercially available from Huvis Corp., Korea) and 50 wt% natural fiber were opened and blended, and the fiber blend was passed through a cylindrical carding machine to form a thin fibrous web to be used as the intermediate inner layer 2-2. Also, 65 wt% low-melting-point sheath-core polyester fiber (LM) and 35 wt% natural fiber were treated in the same manner as above to form a thin fibrous web to be used as the upper inner layer 2-1 and the lower inner layer 2-3. Also, 80 wt% low-melting-point polyester fiber (LM), 15 wt% polyester (PET) and 5 wt% natural fiber were opened and uniformly blended, and the fiber blend was passed through the carding machine to form a thin fibrous web to be used as the outer layer 1 or 3. A doubling step was performed so as to place the outer layers 1 and 3 on both surfaces of the inner layer consisting of the layers 2-1, 2-2 and 2-3, thus forming a five-layer structure, and the layers of the multilayer structure were bonded to each other by needle punching. The composite nonwoven fabric resulting from the needle punching had a weight of 2100 g/m², and was passed through a continuous composite board manufacturing apparatus at a speed of 6 m/min to manufacture composite boards having a thickness of 2.6 ± 0.1 mm. The preheating unit in the continuous composite board manufacturing apparatus was maintained at a temperature of 180 °C, and the melt pressing/expanding unit consisted of four zones which were maintained at a temperature of 210-250 °C, and the cooling unit consisted of two zones which were maintained at temperatures automatically controlled to 60 °C and 30 °C, respectively. Physical properties according to the kind of natural fiber, i.e., the use of jute, henaf and abaca, are shown in Table 4 below.

**Table 4**

| Sample | | | KRP-16 | KRP-17 | KRP-18 |
|---|---|---|---|---|---|
| Kind of Natural Fiber | | | Jute | Kenaf | Abaca |
| Specific Gravity (g/cm³) | | | 0.80 | 0.80 | 0.80 |
| Tensile | Strength (MPa) | MD | 54.5 | 55.6 | 58.6 |
| | | AMD | 45.5 | 48.2 | 52.1 |
| | Modulus (GPa) | MD | 4.4 | 4.5 | 4.8 |
| | | AMD | 3.9 | 4.1 | 4.4 |
| | Elongation (%) | MD | 4.8 | 4.7 | 4.5 |
| | | AMD | 5.3 | 5.1 | 5.0 |
| Flexural | Strength (MPa) | MD | 62.5 | 65.2 | 68.3 |
| | | AMD | 52.6 | 53.4 | 56.4 |
| | Modulus (GPa) | MD | 4.5 | 4.6 | 4.7 |
| | | AMD | 3.9 | 4.1 | 4.4 |
| Moisture absorption, after 2.5h (%) | | | 1.8 | 1.7 | 1.5 |

As is evident from the above Examples, the continuous composite board manufacturing apparatus designed by the applicant can manufacture boards having various thickness values and physical properties (e.g., low strength, medium strength, high strength, etc.) at the same weight. For headliners among automotive interior parts, a low-strength board having excellent impact absorption properties can be applied, and for package trays, a medium-strength board can be applied, and since door trim, seat back panels and the like requires high-strength properties, a high-strength board can be applied for these parts. Particularly, automotive outer panels, such as back beams and fenders, which are to be made of a material substituting for iron, are considered to necessarily require high-strength properties.

The present invention is not limited to the above Examples. For example, even when a sheath-core bicomponent fiber having physical properties similar to those of polypropylene, used as the base material in Examples above, is used as the base material, the same effects can be obtained. Moreover, when hemp, flax, kenaf, abaca or banana fiber, which has physical properties similar to those of jute, is used as the reinforcing fiber in Examples above, the same effects can also be obtained.

The lightweight composite board manufactured through the continuous composite board manufacturing apparatus according to the present invention is characterized in that it can be manufactured into products using a molding machine for automotive interior parts, and the products can be used as automotive interior parts, such as package trays, door trim, headliners, seat back panels and the like, as well as building and industrial materials, such as partitions, furniture, plywood and the like. The lightweight composite board according to the present invention can be applied according to the intended use, because it can be manufactured into a composite board having a low strength of less than 25 MPa, a medium strength of 25-45 MPa or a high strength of more than 45 MPa at the same weight by designing it to have a multilayer structure and controlling the dispersion of heat in thermal bonding. In addition, thanks to lightweight, high specific strength, inelastic and enhanced mechanical properties, the composite board according to the present invention can be widely used in various industrial fields, such as airplanes, ships, automotive parts, precise electric and electronic products, etc., which require materials having improved properties with respect to strength, stiffness and durability.

## Claims

1. A high-performance lightweight composite board for automotive interior parts, which comprises: an inner layer (2) and an outer layer (1 or 3) adhered to at least one surface of the inner layer,
wherein the inner layer is integrally made of a blend of 40-90 wt% base material and 10-60 wt% natural fiber; **characterized by** that the outer layer (1 or 3) is integrally made of a blend of 60-80 wt% base material, 15-25 wt% polyester and 5-15 wt% natural fiber.

2. The composite board of Claim 1, wherein the inner layer 2 has a three-layer structure consisting of an upper inner layer (2-1), an intermediate inner layer (2-2) and a lower inner layer (2-3), in which the upper inner layer and the lower inner layer are the same with respect to the contents of the base material and the natural fiber within a ratio range of 40-90 wt% of the base material to 10-60 wt% of the natural fiber, and the intermediate inner layer has a base material content and natural fiber content different from those of the upper inner and lower inner layers.

3. The composite board of Claim 2, wherein the upper inner layer (2-1) and the lower inner layer (2-3) are made of 60-70 wt% of the base material and 30-40 wt% of the natural fiber, and the intermediate middle layer (2-2) is made of 50-60 wt% of the base material and 40-50 wt% of the natural fiber.

4. The composite board of Claim 1, wherein the base material is polypropylene or a sheath-core bicomponent fiber composed of a high-melting-point core component and a low-melting-point sheath component.

5. The composite board of Claim 1, wherein the natural fiber is any one selected from the group consisting of hemp, jute, flax, kenaf, abaca and banana fibers.

6. The composite board of Claim 4, wherein the sheath-core bicomponent fiber is a blend of 50-70 wt% of the core component, having a melting point of 240-270 °C, and 30-50 wt% of the sheath component, having a melting point of 110-180 °C, and is any one selected from among a bicomponent fiber composed of polyester copolymer as the sheath component and polyester as the core component, a bicomponent fiber composed of polyester glycol as the sheath component and polyester as the core component, a bicomponent fiber composed of high-density polyethylene as the sheath component and polyester as the core component, a bicomponent fiber composed of high-density polyethylene as the sheath component and polypropylene as the core component, and a bicomponent fiber composed of polypropylene as the sheath component and polyester as the core component.

7. An automotive interior part comprising the lightweight composite board of any one of Claims 1 to 6.

8. A method for manufacturing a high-performance lightweight composite board as set forth in Claim 1, the method comprising:
a fiber opening and blending step of opening and uniformly blending 40-90 wt% base material and 10-60 wt% natural fiber to form a first fiber blend, and
opening and uniformly blending 60-80 wt% base material, 15-25 wt% polyester and 5-15 wt% natural fiber;
a carding step of passing each of the first fiber blend and the second fiber blend through a cylindrical carding machine to form thin fibrous webs;
a doubling step of stacking the thin fibrous webs formed from the first fiber blend as an inner layer (2) and the web formed from the second fiber blend as an outer layer (1 or 3) on each other so as to place the outer layer (1 or 3) on at least one surface of the inner layer (2) to form a multilayer web structure;
a step of bonding the layers of the multilayer web structure to each other by needle punching to make a nonwoven fabric; and
feeding the nonwoven fabric into a continuous composite board manufacturing apparatus, in which the nonwoven fabric is subjected to continuous processes of preheating, thermal bonding, pressing, cooling, expanding, and cutting, thus manufacturing the lightweight composite board.

9. The method of Claim 8, wherein the base material is polypropylene or a sheath- core bicomponent fiber composed of a high-melting-point core component and a low-melting-point sheath component.

10. The method of Claim 8, wherein the natural fiber is any one selected from the group consisting of hemp, jute, flax, kenaf, abaca and banana fibers.

11. The method of Claim 9, wherein the sheath-core bicomponent fiber is a blend of the 50-70 wt% of core component, having a melting point of 240-270 °C, and 30-50 wt% of the sheath component, having a melting point of 110-180 °C, and is any one selected from among a bicomponent fiber composed of polyester copolymer as the sheath component and polyester as the core component, a bicomponent fiber composed of polyester glycol as the sheath component and polyester as the core component, a bicomponent fiber composed of high-density polyethylene as the sheath component and polyester as the core component, a bicomponent fiber composed of high-density polyethylene as the sheath component and polypropylene as the core component, and a bicomponent fiber composed of polypropylene as the sheath component and polyester as the core component.

12. The composite board according two any one of claims 1 to 6, which is manufactured according to the method of any one of Claims 8 to 11.

13. An automotive interior part comprising the lightweight composite board of Claim 12.

## Patentansprüche

1. Leichte Hochleistungsverbundplatte für Kraftfahrzeuginnenteile, die umfasst: eine innere Lage (2) und eine äußere Lage (1 oder 3), die an wenigstens einer Oberfläche der inneren Lage haftet,
wobei die innere Lage einteilig aus einem Gemisch aus 40-90 Gew.-% Grundmaterial und aus 10-60 Gew.-% Naturfaser hergestellt ist; **dadurch gekennzeichnet, dass**
die äußere Lage (1 oder 3) einteilig aus einem Gemisch aus 60-80 Gew.-% Grundmaterial, 15-25 Gew.-% Polyester und 5-15 Gew.-% Naturfaser hergestellt ist.

2. Verbundplatte nach Anspruch 1, wobei die innere Lage (2) eine Dreilagenstruktur besitzt, die aus einer inneren oberen Lage (2-1), einer inneren Zwischenlage (2-2) und einer inneren unteren Lage (2-3) besteht,
wobei die innere obere Lage und die innere untere Lage bezüglich der Gehalte an Grundmaterial und Naturfaser innerhalb eines Verhältnisbereichs von 40-90 Gew.-% des Grundmaterials zu 10-60 Gew.-% der Naturfaser gleich sind und die innere Zwischenlage einen Grundmaterialgehalt und einen Naturfasergehalt besitzt, die von jenen der inneren oberen und der inneren unteren Lage verschieden sind.

3. Verbundplatte nach Anspruch 2, wobei die innere obere Lage (2-1) und die innere untere Lage (2-3) aus 60-70 Gew.-% Grundmaterial und aus 30-40 Gew.-% Naturfaser hergestellt sind und die mittlere Zwischenlage (2-2) aus 50-60 Gew.-% Grundmaterial und aus 40-50 Gew.-% Naturfaser hergestellt ist.

4. Verbundplatte nach Anspruch 1, wobei das Grundmaterial Polypropylen oder eine Hülle-Kern-Zweikomponentenfaser ist, die aus einer hoch schmelzenden Kernkomponente und einer niedrig schmelzenden Hüllenkomponente aufgebaut ist.

5. Verbundplatte nach Anspruch 1, wobei die Naturfaser eine Faser ist, die aus der Gruppe gewählt ist, die aus Hanf-, Jute-, Flachs-, Kenaf-, Abaca- und Bananenfasern besteht.

6. Verbundplatte nach Anspruch 4, wobei die Hülle-Kern-Zweikomponentenfaser ein Gemisch aus 50-70 Gew.-% der Kernkomponente mit einem Schmelzpunkt von 240-270 °C und aus 30-50 Gew.-% der Hüllenkomponente mit einem Schmelzpunkt von 110-180 °C ist und irgendein Gemisch ist, das ausgewählt ist aus einer Zweikomponentenfaser, die gebildet ist aus einem Polyester-Copolymer als Hüllenkomponente und Polyester als Kernkomponente, einer Zweikomponentenfaser, die aus Polyester-Glycol als Hüllenkomponente und Polyester als Kernkomponente gebildet ist, einer Zweikomponentenfaser, die aus hochdichtem Polyethylen als Hüllenkomponente und Polyester als Kernkomponente gebildet ist, einer Zweikomponentenfaser, die aus hochdichtem Polyethylen als Hüllenkomponente und Polypropylen als Kernkomponente gebildet ist, und einer Zweikomponentenfaser, die aus Polypropylen als Hüllenkomponente und Polyester als Kernkomponente gebildet ist.

7. Kraftfahrzeuginnenteil, das die leichte Verbundplatte nach einem der Ansprüche 1 bis 6 enthält.

8. Verfahren zum Herstellen einer leichten Hochleistungsverbundplatte nach Anspruch 1, wobei das Verfahren umfasst:
einen Faseröffnungs- und Mischungsschritt zum Öffnen und gleichmäßigen Mischen von 40-90 Gew.-% Grundmaterial und 10-60 Gew.-% Naturfaser, um ein erstes Fasergemisch zu bilden, und
zum Öffnen und gleichmäßigen Mischen von 60-80 Gew.-% Grundmaterial, 15-25 Gew.-% Polyester und 5-15 Gew.-% Naturfaser;
einen Kardierungsschritt zum Bewegen sowohl des ersten Fasergemisches als auch des zweiten Fasergemisches durch eine zylindrische Kardierungsmaschine, um dünne faserartige Bahn zu bilden;
einen Aufdoppelungsschritt zum Stapeln der dünnen faserartigen Bahn, die aus dem ersten Fasergemisch gebildet worden sind, als eine innere Lage (2) und der Bahn, die aus dem zweiten Fasergemisch gebildet worden ist, als eine äußere Lage (1 oder 3) übereinander, um so die äußere Lage (1 oder 3) wenigstens auf einer Oberfläche der inneren Lage (2) anzuordnen, um eine Mehrlagen-Bahnstruktur zu bilden;
einen Schritt des Verbindens der Lagen der Mehrlagen-Bahnstruktur miteinander durch Vernadeln, um einen Vliesstoff zu bilden; und
Zuführen des Vliesstoffs zu einer kontinuierlichen Verbundplatten-Herstellungsvorrichtung, in der der Vliesstoff kontinuierlichen Prozessen eines Vorerhitzens, eines thermischen Verbindens, eines Pressens, eines Kühlens, eines Expandierens und eines Schneidens unterworfen wird, wodurch die leichte Verbundplatte hergestellt wird.

9. Verfahren nach Anspruch 8, wobei das Grundmaterial Polypropylen oder eine Hülle-Kern-Zweikomponentenfaser ist, die aus einer hoch schmelzenden Kernkomponente und einer niedrig schmelzenden Hüllenkomponente gebildet ist.

10. Verfahren nach Anspruch 8, wobei die Naturfaser eine Faser ist, die aus der Gruppe gewählt ist, die aus Hanf-, Jute-, Flachs-, Kenaf-, Abaca- und Bananenfasern besteht.

11. Verfahren nach Anspruch 9, wobei die Hülle-Kern-Zweikomponentenfaser ein Gemisch aus 50-70 Gew.-% der Kernkomponente mit einem Schmelzpunkt von 240-270 °C und 30-50 Gew.-% der Hüllenkomponente mit einem Schmelzpunkt von 110-180 °C ist und irgendeine Zweikomponentenfaser ist, die ausgewählt ist aus einer Zweikomponentenfaser, die aus Polyester-Copolymer als Hüllenkomponente und Polyester als Kernkomponente gebildet ist, einer Zweikomponentenfaser, die aus Polyester-Glycol als Hüllenkomponente und Polyester als Kernkomponente gebildet ist, einer Zweikomponentenfaser, die aus hochdichtem Polyethylen als Hüllenkomponente und Polyester als Kernkomponente gebildet ist, einer Zweikomponentenfaser, die aus hochdichtem Polyethylen als Hüllenkomponente und Polypropylen als Kernkomponente gebildet ist, und einer Zweikomponentenfaser, die aus Polypropylen als Hüllenkomponente und Polyester als Kernkomponente gebildet ist.

12. Verbundplatte nach einem der Ansprüche 1 bis 6, die gemäß dem Verfahren nach einem der Ansprüche 8 bis 11 hergestellt ist.

13. Kraftfahrzeuginnenteil, das die leichte Verbundplatte nach Anspruch 12 enthält.

## Revendications

1. Panneau composite léger de haute performance pour pièces intérieures automobiles, qui comprend : une couche interne (2) et une couche interne (1 ou 3) adhérant à au moins une surface de la couche interne,
où la couche interne est intégralement constituée d'un mélange de 40 à 90 % en poids d'un matériau de base et 10 à 60 % de poids de fibre naturelle ; **caractérisé en ce que** la couche interne (1 ou 3) est intégralement constituée d'un mélange de 60 à 80 % en poids de matériau de base, 15 à 25 % en poids de poly(ester) et 5 à 15 % de fibre naturelle.

2. Panneau composite selon la revendication 1, dans lequel la couche interne (2) a une structure à trois couche consistant en une couche interne supérieure (2-1), une couche interne intermédiaire (2-2) et une couche interne inférieure (2-3) dans lesquelles la couche interne supérieure et la couche interne inférieure sont les mêmes concernant les teneurs du matériau de base et de la fibre naturelle dans une gamme de rapport de 40 à 90 % en poids du matériau de base à 10 à 60 % en poids de la fibre naturelle, et la couche interne intermédiaire a une teneur en matériau de base et une teneur en fibre naturelle différentes de celles des couches interne supérieure et interne inférieure.

3. Panneau composite selon la revendication 2, dans lequel la couche interne supérieure (2-1) et la couche interne inférieure (2-3) sont constituées de 60 à 70 % en poids du matériau de base et 30 à 40 % en poids de la fibre naturelle, et la couche interne intermédiaire (2-2) est constituée de 50 à 60 % en poids du matériau de base et 40 à 50 % en poids de la fibre naturelle.

4. Panneau composite selon la revendication 1, dans lequel le matériau de base est le poly(propylène) ou une fibre bicomposant gaine-noyau composée d'un composant de noyau de haut point de fusion et d'un composant de gaine de bas point de fusion.

5. Panneau composite selon la revendication 1, dans lequel la fibre naturelle est l'une quelconque choisie dans le groupe consistant en les fibres de chanvre, jute, lin, kenaf, abaca et banane.

6. Panneau composite selon la revendication 4, dans lequel la fibre bicomposant gaine-noyau est un mélange de 50 à 70 % en poids du composant de noyau, ayant un point de fusion de 240 à 270 °C, et 30 à 50 % en poids du composant de gaine, ayant un point de fusion de 110 à 180 °C, et est un élément quelconque choisi parmi une fibre bicomposant composée d'un copolymère de poly(ester) en tant que composant de gaine et de poly(ester) en tant que composant de noyau, une fibre bicomposant composée de poly(ester glycol) en tant que composant de gaine et de poly(ester) en tant que composant de noyau, une fibre bicomposant composée de poly(éthylène) haute densité en tant que composant de gaine et de poly(ester) en tant que composant de noyau, une fibre bicomposant composée de poly(éthylène) haute densité en tant que composant de gaine et de poly(propylène) en tant que composant de noyau, et une fibre bicomposant composée de poly(propylène) en tant que composant de gaine et de poly(ester) en tant que composant de noyau.

7. Pièce intérieure automobile comprenant le panneau composite léger de l'une quelconque des revendications 1 à 6.

8. Procédé de fabrication d'un panneau composite léger de haute performance tel qu'indiqué dans la revendication 1, le procédé comprenant :
une étape d'ouverture et de mélange de fibre consistant à ouvrir et mélanger uniformément 40 à 90 % en poids de matériau de base et 10 à 60 % en poids de fibre naturelle pour former un premier mélange de fibres,
et
une étape d'ouverture et de mélange uniforme de 60 à 80 % en poids de matériau de base, 15 à 25 % en poids de poly(ester) et 5 à 15 % en poids de fibre naturelle ;
une étape de cardage consistant à faire passer chacun des premier mélange de fibres et second mélange de fibres à travers une carde cylindrique pour former des voiles fibreux fins ;
une étape de doublage consistant à empiler les voiles fibreux fins formés à partir du premier mélange de fibres en tant que couche interne (2) et le voile formé à partir du second mélange de fibres en tant que couche externe (1
ou 3) les uns sur les autres de façon à placer la couche externe (1 ou 3) sur au moins une surface de la couche interne (2) pour former une structure de voile multicouche ;
une étape de liaison des couches de la structure de voile multicouche les unes aux autres par aiguilletage pour produire un tissu non tissé ; et
introduire le tissu non tissé dans un appareil de fabrication continu de panneau composite, dans lequel le tissu non tissé est soumis à des processus continus de préchauffage, liaison thermique, pressage, refroidissement, expansion et coupe, fabriquant ainsi le panneau composite léger.

9. Procédé selon la revendication 8, dans lequel le matériau de base est le poly(propylène) ou une fibre bicomposant gaine-noyau composée d'un noyau de haut point de fusion et d'un composant de gaine de bas point de fusion.

10. Procédé selon la revendication 8, dans lequel la fibre naturelle est l'une quelconque choisie dans le groupe consistant en les fibres de chanvre, jute, lin, kenaf, abaca et banane.

11. Procédé selon la revendication 9, dans lequel la fibre bicomposant gaine-noyau est un mélange de 50 à 70 % en poids du composant de noyau, ayant un point de fusion de 240 à 270 °C, et 30 à 50 % en poids du composant de gaine, ayant un point de fusion de 110 à 180 °C, et est un élément quelconque choisi parmi une fibre bicomposant composée d'un copolymère de poly(ester) en tant que composant de gaine et de poly(ester) en tant que composant de noyau, une fibre bicomposant composée de poly(ester glycol) en tant que composant de gaine et de poly(ester) en tant que composant de noyau, une fibre bicomposant composée de poly(éthylène) haute densité en tant que composant de gaine et de poly(ester) en tant que composant de noyau, une fibre bicomposant composée de poly(éthylène) haute densité en tant que composant de gaine et de poly(propylène) en tant que composant de noyau, et une fibre bicomposant composée de poly(propylène) en tant que composant de gaine et de poly(ester) en tant que composant de noyau.

12. Panneau composite selon l'une quelconque des revendications 1 à 6, qui est fabriqué selon le procédé de l'une quelconque des revendications 8 à 11.

13. Pièce intérieure automobile comprenant le panneau composite léger de la revendication 12.
